# EUROPÄISCHE PATENTSCHRIFT

(11) **EP 0 433 793 B1**
(45) Veröffentlichungstag und Bekanntmachung des Hinweises auf die Patenterteilung: **30.11.1994**
(21) Anmeldenummer: 90123524.2
(22) Anmeldetag: 07.12.1990
(51) Int. Cl.: A47K 11/02, A47K 11/04

(54) **Trockentoilette mit verschliessbarem Behälter zur Aufnahme von Fäkalien**
Dry closet with closable container for receiving the faeces
Cabinet sec avec récipient obturable pour recevoir les fèces

(30) Priorität: 19.12.1989 DE 3941939
(43) Veröffentlichungstag der Anmeldung: 26.06.1991
(73) Patentinhaber: Löbbert, Johannes, D-48301 Nottuln (DE)
(72) Erfinder: Löbbert, Johannes, D-48301 Nottuln (DE)
(74) Vertreter: Hoffmeister, Helmut, Dr. Dipl.-Phys.

(56) Entgegenhaltungen:
- WO-A-88/02614
- WO-A-88/03416
- DE-A- 3 246 187
- DE-C- 823 923
- DE-U- 7 205 756
- FR-A- 1 174 621
- FR-A- 2 098 909
- US-A- 2 866 980

## Beschreibung

Die Erfindung betrifft die Verwendung eines verschließbaren Behälters zur Aufnahme von Abfällen als Trockentoilette mit Sitz.

Aus der Schrift WO 88/03416 ist eine Vorrichtung zur hygienischen Abfallaufnahme bekannt, mit folgenden Elementen:
- einem Behälter, der von einer Haltevorrichtung getragen und mit einem Deckel verschließbar ist, wobei der Deckel auf den Kragen des Behälters, der auf seinem Umfang Rastelemente aufweist, aufgesetzt wird,
- zu den Rastelementen des Kragens kompatible Gegenelemente, mit denen der Deckel verrsehen ist,
- wobei Rast- und Gegenelemente festsitzend zu verbinden sind und nach dem Einrasten des Deckels einen hermetischen Verschluß des Behälters ergeben und ein Herausheben des Behälters unter Ergreifen des Deckels ermöglichen.

Nach der Erfindung ist die Verwendung des aus der vorgenannten Schrift WO 88/03417 bekannten, verschließbaren Behälters als Trockentoilette mit Sitz vorgesehen. Dabei kommt der bei dem Behälter vorhandene Kragen während des Stuhlgangs im Bereich des Toilettensitzes zu liegen. Der Behälter ist nach dem Stuhlgang aus dem Toilettensitz entnehmbar und verschlossen ablegbar ist. Analog zu dem eingangs beschriebenen Behälter nach dem Stande der Technik besitzt nunmehr die Trockentoilette folgende Elemente:
- Rastelemente auf dem Umfang des Kragens;
- einen Deckel, mit dem der Behälter nach dem Stuhlgang verschließbar ist und der mit zu den Rastelementen des Kragens kompatiblen Gegenelementen versehen ist,
- wobei Rast- und Gegenelemente festsitzend zu verbinden sind und nach dem Einrasten des Deckels einen hermetischen Verschluß des Behälters ergeben und ein Herausheben des Behälters unter Ergreifen des Deckels ermöglichen,
- und die Toilette eine als Schemel gestaltete Basis mit einem von oben zugänglichen Hohlraum besitzt, die vom Toilettensitz wenigstens teilweise umgeben ist und in die der Behälter eingestellt bzw. eingehängt werden kann,
- und mit einer unterhalb des Behälters angeordneten Supportvorrichtung, die den Behälter von unten stutzt und die in vertikaler Richtung verstellbar ist.

Eine weitere Trockentoilette ist aus der US-PS 3 495 278 bekannt. Der Behälter ist bei dieser bekannten Toilette als flexibler Beutel gestaltet. Der Toilettensitz ist mit einer Drehvorrichtung versehen, die nach dem Stuhlgang gegenüber dem als Umbehälter gestalteten Toilettenschemel verdrehbar ist, so daß sich der mit den Fäkalien gefüllte Beutel verdrillt und damit verschließt. Der verdrillte und verschlossene Beutel kann abgehoben werden und einer Entsorgung zugeführt werden.

Der Benutzer muß demnach im Bereich des Toilettensitzes Manipulationen durchführen und auch den geschlossenen Beutel im Verdrillungsbereich aufnehmen und entfernen. Dabei ist nachteilig, daß bei einem Einsatz der Toilette im öffentlichen Bereich (Flugzeug, Camping, Bus) nicht sichergestellt ist, daß jeder Benutzer die notwendigen Handgriffe ausführt, und dem nachfolgenden Benutzer eine saubere Toilette hinterläßt. Außerdem ist es unangenehm, in den Sitzbereich hineinzugreifen und den gefüllten Beutel im Drillbereich zu ergreifen.

Es sei weiterhin verwiesen auf eine "Abort-Vorrichtung" gemäß **DE-U-71 03 988.** Bei dieser Vorrichtung ist ein Sitz vorhanden, unter dem eine grubenartige Kammer vorgesehen ist, deren Wandung wärmeisoliert und derart mit einem Kühlsystem verbunden ist, daS eine Kühlung der in die Grube fallenden Fäkalien erfolgt, wobei zum Transport ein Beutel vorgesehen ist, der als Verkleidung der Gruben-Wandung eingesetzt wird. Der Beutel mit den tiefgefrorenen, festen Fäkalien wird entnommen und vor dem Auftauen entsorgt. Nachteilig bei dieser Vorrichtung ist, daß der Wärmeinhalt der frischen Fäkalien, die eine Temperatur von 36°C haben, den Kältevorrat rasch verbrauchen werden, so daß ein ständiges Nachkühlen erforderlich ist. Eine Kühlmaschine mit lautem Kompressorgeräusch dürfte aber einmal sehr aufwendig sein, zum anderen auf Camping-Plätzen unerwünscht sein. Das Problem der Entsorgung bleibt weiterhin eine ekelerregende Tätigkeit.

Die Nachteile des Standes der Technik werden bei der Erfindung vermieden; es ist eine Trockentoilette geschaffen, die einen störungsfreien, hygienischen Betrieb gewährleistet und dem Benutzer und Entsorger möglichst wenige unangenehme Arbeiten zumutet.

Um das Aufsetzen des Deckels zu erleichtern, wird in der Vertiefung eine Supportvorrichtung angeordnet, die den Behälter von unten stützt und die vorzugsweise in vertikaler Richtung verstellbar ist.

Vorteilhaft ist weiterhin, daß mit Hilfe der Supportvorrichtung vorzugsweise der Beutel zusammengedrückt werden kann, so daß der Behälter vor dem Aufsetzen des Deckels verkleinerbar ist.

Wesentlich ist insgesamt die Funktion, daß durch die verstellbare Supportvorrichtung bei aufliegendem Toilettensitz der Deckel gegen den nach oben drückenden Behälterrand aufgedrückt wird, so daß die Rastelemente ineinander dringen und rasten.

Merkmale weiterer Unteransprüche werden in der nachfolgenden Beschreibung erläutert.

Die Beschreibung erfolgt anhand einer Zeichnung. Die Figuren der Zeichnung zeigen im einzelnen:
- Figur 1: eine Seitenansicht einer Trockentoilette in einer ersten Ausführungsform, mit geöffnetem Toilettendeckel;
- Figur 2: eine Seitenansicht der Trockentoilette gemäß Figur 1, mit geschlossenem Toilettendeckel;
- Figur 3: einen Schnitt gemäß der Linie A - B der Figur 1;
- Figur 4: eine Vorderansicht der Trockentoilette gemäß Figur 1 im Schnitt;
- Figuren 5 und 6: ähnliche Ansichten wie Figuren 1 bzw. 2, jedoch einer anderen Ausführungsform.

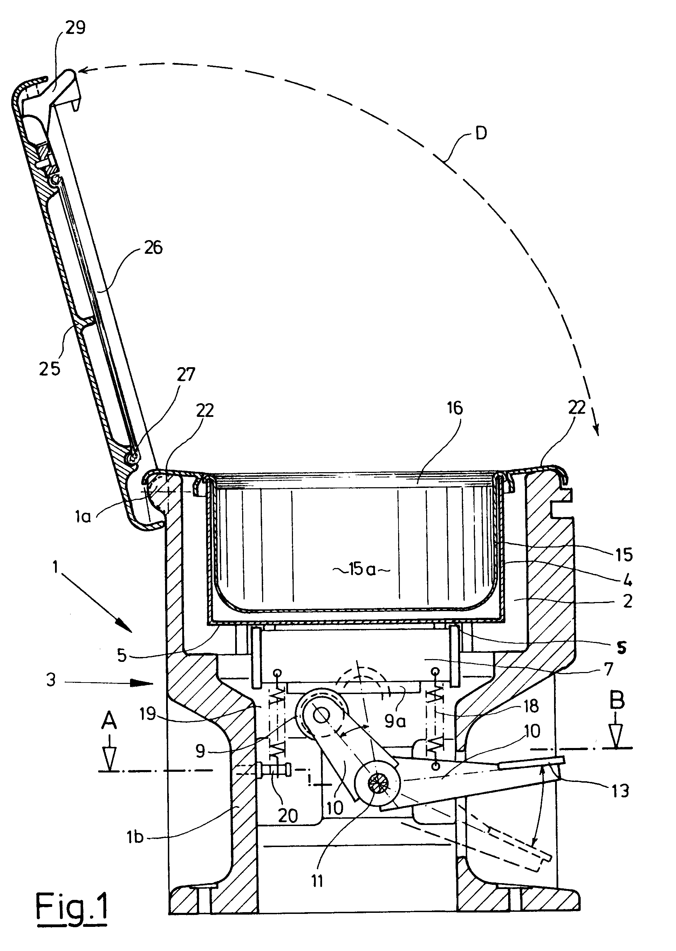

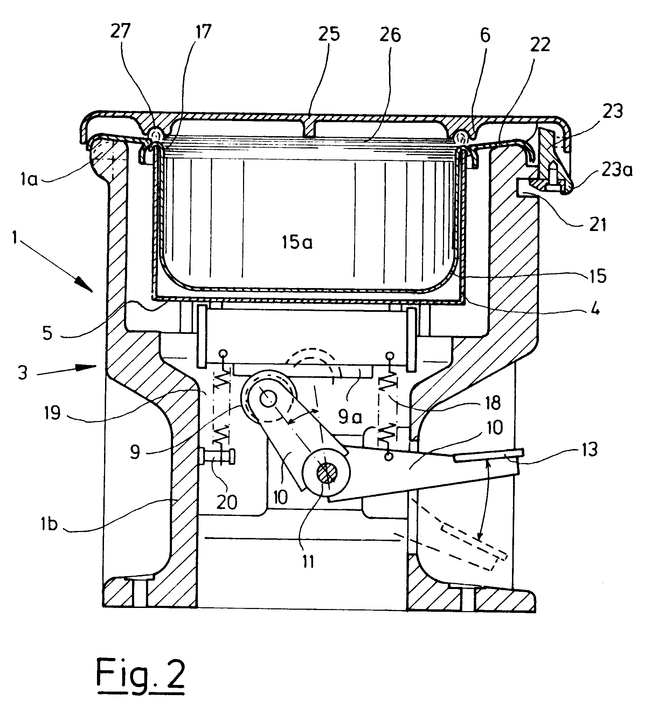

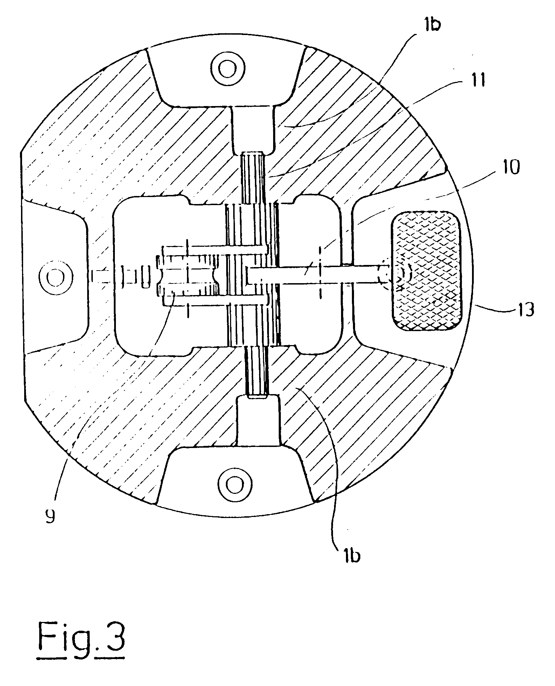

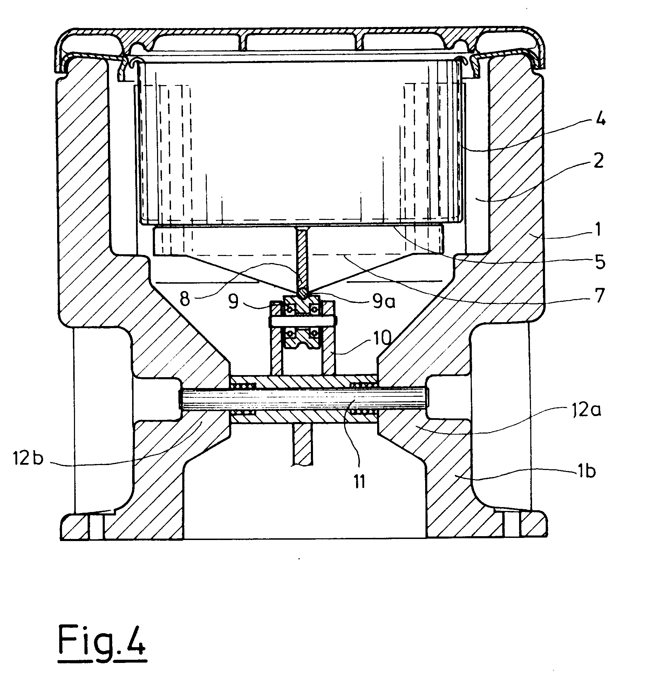

Eine Trockentoilette gemäß den Figuren 1 bis 4 besteht aus einer als Schemel gestalteten Basis 1, die etwa im Schnitt die Form eines Kelches hat. Das Innere der Basis 1 ist ein von oben zugänglicher Hohlraum 2, in den auf etwa halber Höhe eine Supportvorrichtung 3 eingebaut ist. Die Supportvorrichtung 3 wiederum trägt einen Aufnahmezylinder 4 aus Stahlblech, der unten durch einen stählernen Boden 5 geschlossen ist und nach oben in einem freien Rand 6 endet. Unterhalb des Bodens 5 ist eine sternartige Stütze 7 angeordnet, die Teil der Supportvorrichtung ist und den Boden 5 von unten unterfaßt und ihn anheben kann. Die Stütze 7 endet nach unten in einem Wulstkamm 8, der in eine Nut 9a einer Tragrolle 9 liegt (vgl. Fig. 4). Die Tragrolle 9 wiederum ist Teil und Ende eines Kniehebels 10, der in einer Welle 11 drehbar gelagert ist. Die Enden der Welle 11 sind in einspringenden Schultern 12a und 12b des untersten Teils 1b der Basis gelagert.

Der Kniehebel 10 ist über ein Pedal 13 zu betätigen und um etwa 30° verschwenkbar. Beim Niederdrücken des Pedals 13 gelangt die Tragrolle 9 in die gestrichelte (obere) Stellung gemäß Figur 1 und hebt damit die Stütze 7 und den Aufnahmezylinder 4 an. Weiterhin sind in die Stütze 7 zwei Spiralfedern 18, 19 eingehängt, die über einen Bolzen 20 bzw. eine Bohrung im Kniehebel 10 anderen Endes aufgehängt sind und dafür sorgen, daß ein der Aufwärtsrichtung entgegengesetzter Zug hervorgerufen wird, der bei Loslassen des Pedals 13 die Supportvorrichtung 3 mit dem Aufnahmezylinder 4 und einem Behälter 15 wieder nach unten zieht.

In den Aufnahmezylinder 4 ist der Behälter 15 aus Kunststoff-Folie eingehängt. Der Behälter 15 besitzt ein Fassungsvermögen von etwa 5 l. Er besteht aus einem Behälterkörper 15a und einem oberen, auf dem Behälterkörper aufsitzenden und mit diesem fest verbundenen, umlaufenden Kragen 16. Der Kragen 16 ist als Stülpwulst mit nach oben zeigender Rundung gestaltet und hat im Querschnitt etwa die Form eines auf dem Kopf stehenden "J". Der Stülpwulst ist hierbei mit der Bezugszahl 17 bezeichnet. Der Kragen 16 besteht beispielsweise aus einem etwa 3 - 5 mm dicken Polyethylen-Torus, während der Behälterkörper 15a aus Polyethylenfolie von etwa 1 mm Dicke gefertigt ist, die mit dem Kragen 16 verschweißt ist. Wie aus der Figur erkennbar ist, liegt der Rand 6 des Aufnahmezylinders 4 unterhalb des Kragens 16 und stützt diesen von unten. Auch ist der eingehängte Behälter 15 um einen gewissen Betrag nach oben verschiebbar.

Nach oben hin endet die Basis 1 in einem Rand 1a, auf den ein Toilettensitz 22 aufgelegt ist. Der Toilettensitz 22 hat etwa die Form eines nach unten offenen Kreisringes und ist so bemessen, daß an seiner Innenseite der Stülpwulst 17 des Behälters 15 anliegt. Somit ergibt sich eine den üblichen Toilettenbrillen nachempfundene Sitzöffnung für den Toilettenbenutzer. Der Toilettensitz 22 ist über eine Feststellvorrichtung 23 an die Basis 1 angeschraubt und von ihr auch wieder abnehmbar. Die Feststellvorrichtung 23 greift mit einer Nase in eine Nut 21, die in dem Rand 1a ausgebildet ist.

An den in der Figur 1 linken Teil des Randes 1a ist ein Toilettendeckel 25 angelenkt. Der Toilettensitz 22 ist gleichzeitig als ein Deckelhalter für einen Behälter-Deckel 26 gestaltet. Der Deckel 26 besteht ebenfalls aus relativ steifen Polyethylen und besitzt randseitige Stülpnuten 27, die als kompatible Rastelemente für den Stülpwulst 17 ausgebildet sind. Der Deckel 26 besitzt ferner noch einen Handgriff, der im dargestellten Zustand eng anliegt, so daß er in der Zeichnung nicht darstellbar ist. Am vorderen Rand des Toilettendeckels ist ein Schnappriegel 29 angebracht.

Beim Herunterschwenken des Toilettendeckels 25 gemäß der gestrichelten Drehlinie D wird der Schnappriegel 29, der federnd am Toilettendeckel 25 gelagert ist, über den äußeren Rand der Feststellvorrichtung 23 geschoben und schnappt unterhalb der Nase 23a ein. Durch Herausdrücken kann er wieder herausgeschwenkt werden. In der SchließStellung des Toilettendeckels 25 liegt demnach der Behälter-Deckel 26 so auf dem Behälter 15 auf, daß die kompatiblen Rast- und Gegenelemente in unmittelbarer kontaktierender Nachbarschaft liegen, aber nicht rasten. Der nach einem Stuhlgang gefüllte Behälter 16 wird fest verschlossen, indem bei aufgelegtem und arretiertem Toilettendeckel 25 das Pedal 13 betätigt wird, wodurch sich die Supportvorrichtung 3 nach oben bewegt und den Stülpwulst 17 von unten in den entsprechenden Stülpnut 27 des Deckels 26 eindrückt. Nach diesem Rastvorgang ist der Deckel 26 ein hermetischer Verschluß des Behälters und erlaubt das Herausheben des Behälters, auch wenn dieser bis zu 7 kg schwer geworden ist, am Handgriff.

Es wird aus der vorstehenden Beschreibung deutlich, daß anstelle eines Stülpdeckels auch ein Inhendeckel verwendet werden kann, der in einen entsprechend ausgestalteten Kragen ausgerüstet ist, d. h. daß dieser beispielsweise Rastnasen als Auflage- und Rastelemente innerhalb des Behälterumrisses trägt. Der Behälter kann sowohl flexibel sein, als auch relativ steif und nicht eindrüokbar. Dies ist in erster Linie eine Kostenfrage. Als Material eignen sich in erster Linie wasserfeste Kunststoffe, aber auch entsprechend beschichtete Papiere und ähnliche, disposable Materialien.

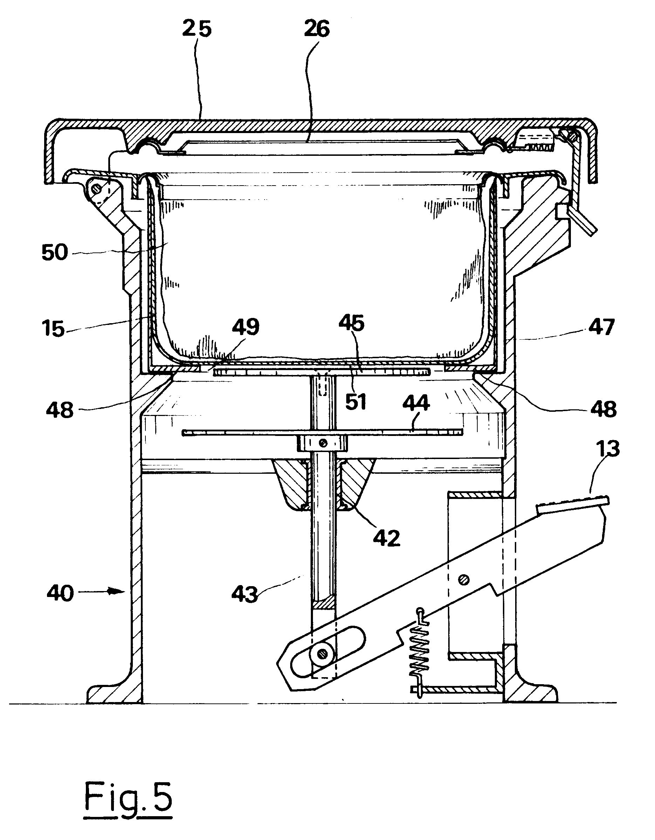

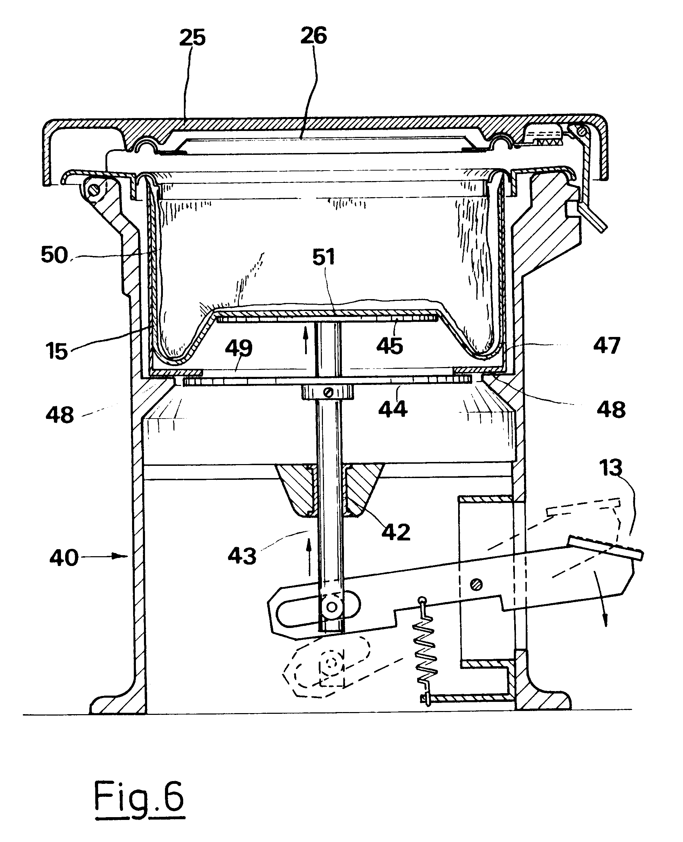

In Figuren 5 und 6 ist eine andere Ausführungsform dargestellt. Bei dieser Ausführungsform ist als Supportvorrichtung eine Hebel-Verstellvorrichtung, bezeichnet mit der Bezugszahl 40, vorgesehen, die einen Endes mit einer in einer Hülsenführung 42 gelagerten Stange 43 verbunden ist. Am oberen Ende der Stange 43 sind zwei im Abstand übereinander liegender Scheiben 44 und 45 konzentrisch zur Stange angebracht. Die obere Scheibe, die den Stangenkopf abschließt, hat einen kleineren Durchmesser, während die untere Scheibe 44 einen größeren Durchmesser besitzt. Ein Aufnahmezylinder 47 aus Edelstahl läuft nach unten in einen flanschartigen Ringrand 48 aus, der mittig eine große Öffnung 49 umschließt. Der Durchmesser der oberen Scheibe 45 ist kleiner als die lichte Weite der Öffnung 49, während der Durchmesser der größeren Scheibe 44 größer ist als diese lichte Weite. Im inneren des Zylinders 47 ist eine topfförmige, elastische

Gummimenbran 50 so eingesetzt, daß sie das Topfinnere ausfüllt und die Öffnung 49 mit ihrem Boden überdeckt. Der Verformungswiderstand der Gummimenbran im Bereich der Öffnung 49 ist so groß, daß bei leerem oder gefülltem (gummigefüttertem) Aufnahmezylinder 47 die Öffnung 49 straff überspannt ist, d.h., die Gummimenbran dort kaum eingedrückt ist.

In diesem Bereich wird der Aufnahmezylinder 47 von der kleinen Scheibe 45 getragen. In das Innere des gummigefütterten Zylinders wird, wie bereits am ersten Ausführungsbeispiel beschrieben, der mit einem steifen Deckelrand versehene Behälter, der im üblichen Sinne ein Beutel ist, eingehängt.

Nach dem Stuhlgang wird der Toilettendeckel geschlossen und gerastet, wie dies bereits beschrieben worden ist. Durch Druck auf das Pedal 13 verstellt sich der Hebel 41 und drückt die Stange 43 nach oben. Dabei kommt die kleinere Scheibe 45, falls noch nicht geschehen, fest in Kontakt mit dem Gummiboden 51 im Bereich der Öffnung 49 und drückt über diesen den Aufnahmezylinder 47 nach oben, bis er in Kontakt mit dem Toilettendeckel 26 kommt. Nach dieser Phase wird über die kleine Scheibe 45 der Deckel 26 nach innen gestülpt, und zwar soweit, bis die große Scheibe 44 mit dem Ringrand 48 des Aufnahmezylinders 47 in Kontakt kommt und damit die Relativbewegung der Stange 43 zu dem Aufnahmezylinder 47 ein Ende hat. Mit weiterer Kraft wird dann der Beutelrand in die entsprechenden kompatiblen Elemente des Deckels 26 eingedrückt, so daß Beutel (Behälter 15) und Deckel 26 miteinander rasten. Diesem Rastvorgang vorangehend ist demnach eine Einschränkung des Volumens des Behälters 15, da die obere Scheibe 44 durch die begrenzte Öffnung 49 unter Verformung der Membran 50 einrückbar ist, bis die untere Scheibe 45 von unten gegen den Ringrand 48 stößt.

Die vorgenannte Lösung stellt eine Möglichkeit dar, das Volumen des eingehängten Behälters 15 vor dem Aufdrücken des Deckels zu verkleinern. Mit ähnlichen Stapelvorrichtungen läßt sich diese technische Variante auch anders ausführen. Das Zusammendrücken des Behälters hat außerdem den Vorteil, daß bei eventuellen Gärvorgängen das entstehende Gas das eingedrückte Volumen zunächst ausfüllt und nicht etwa den Behälter 15 zum Platzen bringt.

## Patentansprüche

1. Verwendung eines verschließbaren Behälters zur Aufnahme von Abfällen als Trockentoilette mit Sitz, wobei der bei dem Behälter vorhandene Kragen während des Stuhlgangs im Bereich des Toilettensitzes zu liegen kommt und der Behälter nach dem Stuhlgang aus dem Toilettensitz entnehmbar und verschlossen ablegbar ist, mit folgenden Elementen:
- Rastelementen (17, 27) auf dem Umfang des Kragens (16);
- einem Deckel (26), mit dem der Behälter (15) nach dem Stuhlgang verschließbar ist und der mit zu den Rastelementen des Kragens (16) kompatiblen Gegenelementen versehen ist,
- wobei Rast- und Gegenelemente (17, 27) festsitzend zu verbinden sind und nach dem Einrasten des Deckels (26) einen hermetischen Verschluß des Behälters (15) ergeben und ein Herausheben des Behälters (15) unter Ergreifen des Deckels (26) ermöglichen,
- und die Toilette eine als Schemel gestaltete Basis (1) mit einem von oben zugänglichen Hohlraum (2) besitzt, die vom Toilettensitz (22) wenigstens teilweise umgeben ist und in die der Behälter (15) eingestellt bzw. eingehängt werden kann,
- und mit einer unterhalb des Behälters (15) angeordneten Supportvorrichtung (3, 40), die den Behälter (15) von unten stützt und die in vertikaler Richtung verstellbar ist.

2. Verwendung eines Behälters als Trockentoilette nach Anspruch 1, dadurch gekennzeichnet, daß die Supportvorrichtung (3, 40) den Behälter unterhalb von dessen Kragen (16) trägt und stützt.

3. Verwendung eines Behälters als Trockentoilette nach Anspruch 1 oder 2, dadurch gekennzeichnet, daß ein den Toilettensitz abdeckender, schwenkbarer Deckel [Toilettendeckel (25)] vorgesehen ist, der auf seiner Innenseite den Deckel (26) freigebbar trägt.

4. Verwendung eines Behälters als Trockentoilette nach Anspruch 1 bis 2, dadurch gekennzeichnet, daß ein steifer Aufnahmezylinder (4, 47) auf der Supportvorrichtung (3, 40) aufsteht, in den der Behälter (16) eingestellt oder eingehängt ist.

5. Verwendung eines Behälters als Trockentoilette nach Anspruch 4, dadurch gekennzeichnet, daß bei vertikaler Verstellung des Behälters (16) und bei herabgeschwenktem Toilettendeckel (25) die Rast- und Gegenelemente von Behälter-Deckel (26) und Behälterrand ineinander stoßen und einrasten.

6. Verwendung eines Behälters als Trockentoilette nach Anspruch 5, dadurch gekennzeichnet, daß der Deckel (26) als Stülpdeckel gestaltet ist und daß eine Stülpwulst (17) am Behälterrand (Kragen 16) als Rastelement vorhanden ist.

7. Verwendung eines Behälters als Trockentoilette nach Anspruch 5, dadurch gekennzeichnet, daß der Deckel (26) als Innendeckel gestaltet ist, der in den Kragen (16) einlegbar ist, und daß Rastnasen als Auflage- und Rastelemente innerhalb des Behälters angeordnet sind.

8. Verwendung eines Behälters als Trockentoilette nach einem der vorhergehenden Ansprüche, dadurch gekennzeichnet, daR der Behälter (15) aus einer flexiblen Kunststoffolie und der Deckel (26) und der Kragen (16) des Behälters (15) aus einem relativ steifen Material bestehen, verglichen mit dem Material des Behälters (15).

9. Verwendung eines Behälters als Trockentoilette wenigstens nach Anspruch 8, dadurch gekennzeichnet, daß mit Hilfe der Supportvorrichtung (3, 40) der Behälter (15) zusammendrückbar ist.

10. Verwendung eines Behälters als Trockentoilette nach einem der vorhergehenden Ansprüche 4 bis 9, dadurch gekennzeichnet, daR der Aufnahmezylinder (47) nach unten eine durch einen Flanschrand (48) begrenzte Öffnung (49) besitzt, die durch eine gummielastische Membram (50) abdeckbar ist,
und daß die Supportvorrichtung (3) eine obere kleine und eine im Abstand dazu stehende größere untere Scheibe (45 bzw. 44) aufweist,
wobei die obere Scheibe (45) durch die begrenzte Öffnung (49) unter Verformung der Membran (50) einrückbar ist, bis die untere Scheibe (44) von unten gegen den Flanschrand (48) stößt.

11. Verwendung eines Behälters als Trockentoilette nach nach einem der vorhergehenden Ansprüche 1 bis 10, gekennzeichnet durch ein an der Unterseite der Supportvorrichtung (3) angreifendes Ende (Rolle 9) einer pedalbetätigbaren Hebelvorrichtung (10), die die Vertikalbewegung des Behälters (15) ermöglicht.

## Claims

1. Use of a closable receptacle for receiving waste as a dry toilet having a seat, the rim of the receptacle being disposed near the seat during defecation, the receptacle being removable from the toilet seat after defecation and being disposable in the closed state, the following elements being provided:
catch elements (17, 27) on the periphery of the rim (16);
a lid (26) for closing the receptacle (15) after defecation and having companion elements compatible with the catch elements of the rim (16);
the catch elements and companion elements (17, 27) being engageable with one another in a tight fit and providing hermetic closure of the receptacle (15) after engagement of the lid (26) and enabling the receptacle (15) to be lifted out by gripping the lid (26);
the toilet having a stool-like base (1) having a top access cavity (2), around which base the toilet seat (22) extends at least to some extent and into which the receptacle (15) can be introduced or hung;
there being provided below the receptacle (15) a support device (3, 40) which supports the receptacle (15) from below and which is vertically displaceable.

2. Use of a receptacle as a dry toilet according to claim 1, characterised in that the support device (3, 40) carries and supports the receptacle below its rim (16).

3. Use of a receptacle as a dry toilet according to claim 1 or 2, characterised in that a pivoted lid [toilet lid (25)] which covers the toilet seat is provided and on its inside releasably carries the lid (26).

4. Use of a receptacle as a dry toilet according to claims 1 and 2, characterized in that a rigid cylindrical envelope (4, 47) into which the receptacle (16) is placed or hung stands on the support device (23, 40).

5. Use of a receptacle as a dry toilet according to claim 4, characterised in that, when the receptacle (16) moves vertically and with the toilet lid (25) in its pivoted-down position, the catch elements and companion elements of the receptacle lid (26) and receptacle edge engage in and catch one another.

6. Use of a receptacle as a dry toilet according to claim 5, characterised in that the lid (26) is a slip-on lid and a bead (17) on the receptacle edge (rim 16) is provided as catch element.

7. Use of a receptacle as a dry toilet according to claim 5, characterized in that the receptacle lid (26) is in the form of an inner lid insertable into the rim (16) and catch Jugs acting as support and catch elements are disposed inside the receptacle.

8. Use of a receptacle as a dry toilet according to any of the previous claims, characterized in that the receptacle (15) is made of a flexible plastics film and its lid (26) and rim (16) are made of a material which is relatively rigid as compared with the receptacle material.

9. Use of a receptacle as a dry toilet at least according to claim 8, characterized in that the receptacle (15) can be compressed by means of the support device (3, 40).

10. Use of a receptacle as a dry toilet according to any of claims 4 to 9, characterized in that the cylindrical envelope (47) has a bottom aperture (49) which is bounded by a flange edge (48) and which can be covered by an elastomeric diaphragm (50).
and the support device (3) has a top small disc (45) and, spaced apart therefrom, a larger bottom disc (44),
the top disc (45) being movable through the aperture (49) with deformation of the diaphragm (50) until the bottom disc (44) abuts the edge (48) from below.

11. Use of a receptacle as a dry toilet according to any of claims 1 to 10, characterized in that an end (roller 9) of a pedal-operated lever mechanism (10) for moving the receptacle (15) vertically engages the underside of the support device (3).

## Revendications

1. Utilisation d'un récipient susceptible d'être fermé pour recevoir des déchets en tant que toilette sèche à siège, la collerette présente sur le récipient venant s'appuyer dans la zone du siège de toilette pendant la selle et le récipient pouvant être enlevé du siège de toilette après la selle et être rejeté à l'état fermé, incluant les éléments suivants:
- des éléments en forme de cliquets (17, 27) sur la périphérie de la collerette (16);
- un couvercle (26), au moyen duquel le récipient (15) peut être fermé après la selle et qui est pourvu de contre-éléments compatibles avec les éléments en forme de cliquets de la collerette (16),
- les éléments en forme de cliquets et les contre-éléments (17, 27) devant être reliés de façon fixe et réalisant après l'encliquetage du couvercle (26) une fermeture hermétique du récipient (15) et permettant de soulever le récipient (15) hors de la prise du couvercle (26),
- et la toilette présentant une base (1) en forme de tabouret, à espace creux (2) accessible du haut, qui est entouré au moins partiellement par le siège (22) de toilette et dans lequel le récipient (15) peut être placé ou suspendu,
et comportant un dispositif de support (3, 40) qui est disposé au-dessous du récipient (15) et qui supporte le récipient (15) depuis 1e dessous et est réglable en direction verticale.

2. Utilisation d'un récipient comme toilette sèche selon la revendication 1, caractérisée en ce que le dispositif de support (3, 40) porte et supporte le récipient au-dessous de la collerette (16) de ce dernier.

3. Utilisation d'un récipient comme toilette sèche selon la revendication 1 ou 2, caractérisée en ce qu'il est prévu un couvercle pivotant, recouvrant le siège de toilette [couvercle (25) de toilette] qui porte de façon détachable le couvercle (26) sur son côté intérieur.

4. Utilisation d'un récipient comme toilette sèche selon la revendication 1 ou 2, caractérisée en ce qu'un cylindre rigide récepteur (4, 47), dans lequel le récipient (15) est placé ou suspendu, est dressé sur le dispositif de support (3, 40).

5. Utilisation d'un récipient comme toilette sèche selon la revendication 4, caractérisée en ce que les éléments en forme de cliquets et les contre-éléments du couvercle (26) de récipient et du bord de récipient pénètrent les uns dans les autres et s'encliquettent lorsque le récipient (15) est en position verticale et que le couvercle (25) de toilette est pivoté vers le bas.

6. Utilisation d'un récipient comme toilette sèche selon la revendication 5, caractérisée en ce que le couvercle (26) est réalisé sous forme de couvercle en cloche et en ce qu'un bourrelet (17) de cloche est présent sur le bord du récipient (collerette 16) en tant qu'élément en forme de cliquet.

7. Utilisation d'un récipient comme toilette sèche selon la revendication 5, caractérisée en ce que le couvercle (26) est réalisé sous forme de couvercle intérieur qui peut être installé dans la collerette (16) et en ce que des taquets de cliquets sont disposés à l'intérieur du récipient pour constituer des éléments d'appui et éléments en forme de cliquets.

8. Utilisation d'un récipient comme toilette sèche selon l'une des revendications précédentes, caractérisée en ce que le récipient (15) se compose d'une feuille de matière plastique flexible et le couvercle (26) et la collerette (16) du récipient (15) sont en une matière relativement rigide par rapport à la matière du récipient (15).

9. Utilisation d'un récipient comme toilette sèche selon la revendication 8, caractérisée en ce que le récipient (15) est compressible à l'aide du dispositif de support (3, 40).

10. Utilisation d'un récipient comme toilette sèche selon l'une des revendications 4 à 9, caractérisée en ce que le cylindre récepteur (47) possède une ouverture (49) limitée vers le bas par un bord (48) de bride qui peut être recouvert par une membrane élastique en caoutchouc (50),
en ce que le dispositif de support (3) possède un petit disque supérieur et un disque inférieur plus grand (45 et 44) disposé à distance du premier,
le disque supérieur (45) pouvant être inséré à travers l'ouverture limitée (49) en déformant la membrane (50), jusqu'à ce que le disque inférieur (44) vienne frapper depuis le bas contre le bord (48) de bride.

11. Utilisation d'un récipient comme toilette sèche selon l'une des revendications 1 à 10, caractérisée par une extrémité (rouleau 9), agissant sur le côté inférieur du dispositif (3) de support, d'un dispositif à levier (10) actionnable par pédale, qui permet le déplacement vertical du récipient (15).
